# EUROPEAN PATENT APPLICATION

(11) **EP 4 137 294 A1**
(43) Date of publication of application: **22.02.2023**
(21) Application number: 21789102.7
(22) Date of filing: 13.04.2021
(51) Int. Cl.: B29C 65/00, H01M 50/116, B29C 53/80, B21D 19/12, B29C 53/02, B29L 31/34, B29L 31/00

(54) **PROP DEVICE FOR TERRACE FOLDING OF SECONDARY BATTERY CELL**

(30) Priority: 13.04.2020 KR 20200044538
(71) Applicant: Clever Co., Ltd., Cheongju-si 28514 (KR)
(72) Inventor: JEONG, Jong Hong, Cheongju-si Chungcheongbuk-do 28127 (KR); KIM, Sang Jin, Daejeon 35355 (KR)
(74) Representative: Scheele Jaeger Wetzel Patentanwälte
(86) International application number: PCT/KR2021/004602
(87) International publication number: WO 2021/210873

(57) **Abstract**

Disclosed is a prop device for terrace folding of a secondary battery cell, which supports, in a direction facing a folding direction, a terrace portion of a secondary battery cell including an electrode stack configured by stacking electrodes, and the terrace portion formed along an outer periphery of the electrode stack and having a part to be folded in the folding direction toward the electrode stack, the prop device including upper and lower props disposed forward of the electrode stack based on the folding direction and each elongated to have a length from one end to the other end of the secondary battery cell in a direction orthogonal to the folding direction, the upper and lower props being disposed above and below the terrace portion while facing each other and configured to hold the terrace portion, in which the upper and lower props are configured such that a thickness for holding the terrace portion in a region in which the electrode stack is disposed at a rear side based on the folding direction is larger than a thickness for holding the terrace portion in a region in which the electrode stack is not disposed at the rear side based on the folding direction.

## Description

### [Technical Field]

The present disclosure relates to a prop device for terrace folding of a secondary battery cell, and specifically, to a prop device for terrace folding of a secondary battery cell, which is capable of preventing the occurrence of a defect by restraining a wide area of a terrace portion at a defect occurrence position at which a terrace deformation defect occurs.

### [Background Art]

This section provides background information related to the present disclosure which is not necessarily prior art.

In a process of manufacturing a secondary battery cell, a process of folding a terrace portion of a secondary battery cell is performed in a state in which all components constituting the secondary battery are assembled.

In addition, the process of folding the terrace portion needs to be precisely performed on the terrace portion having a small area along an outer periphery of an electrode stack, and the process may be accompanied by a heat treatment process.

A general prop device for terrace folding of a secondary battery cell, which is used for the process of folding a terrace portion of a secondary battery cell, includes an upper prop and a lower prop.

During the general process of folding a terrace portion of a secondary battery cell, a wide surface of a secondary battery cell is disposed to be directed in an upward/downward direction, the upper prop is disposed above the terrace portion, and the lower prop is disposed below the terrace portion.

The upper and lower props move upward or downward while facing each other and come into contact with the terrace portion. An end of the terrace portion is folded toward the upper prop by a folding press.

Because the terrace portion is formed by bonding a soft pouch for a secondary battery, there is a high likelihood that the terrace portion is inadvertently deformed in shape during a process in which an inadvertent external force is transmitted.

In particular, if the terrace portion, which is not restrained by the upper and lower props, is inadvertently deformed, there may occur a fatal defect that affects stability of the secondary battery cell.

### [Disclosure]

### [Technical Problem]

An object of the present disclosure is to provide a prop device for terrace folding of a secondary battery cell, which is capable of preventing a deformation defect that occurs at an end of a terrace portion based on a longitudinal direction of the terrace portion during a process of folding the terrace portion of the secondary battery cell.

### [Technical Solution]

This section provides a general summary of the disclosure and is not a comprehensive disclosure of its full scope or all of its features.

One aspect of the present disclosure provides a prop device for terrace folding of a secondary battery cell, which supports, in a direction facing a folding direction, a terrace portion of a secondary battery cell including an electrode stack configured by stacking electrodes, and the terrace portion formed along an outer periphery of the electrode stack and having a part to be folded in the folding direction toward the electrode stack, the prop device including: upper and lower props disposed forward of the electrode stack based on the folding direction and each elongated to have a length from one end to the other end of the secondary battery cell in a direction orthogonal to the folding direction, the upper and lower props being disposed above and below the terrace portion while facing each other and configured to hold the terrace portion, in which the upper and lower props are configured such that a thickness for holding the terrace portion in a region in which the electrode stack is disposed at a rear side based on the folding direction is larger than a thickness for holding the terrace portion in a region in which the electrode stack is not disposed at the rear side based on the folding direction.

In the prop device for terrace folding of a secondary battery cell according to one aspect of the present disclosure, the upper prop may move upward or downward above the terrace portion, the upper prop may be disposed between the electrode stack and the terrace portion, and the upper prop may include: an upper inner portion on which the electrode stack is disposed in the folding direction; and upper outer portions respectively disposed at two opposite ends of the upper inner portion and further extending than the upper inner portion in the folding direction such that a thickness of the upper inner portion, which comes into contact with the terrace portion in the folding direction, is larger than that of the upper inner portion, and the electrode stack is not disposed in the folding direction.

In the prop device for terrace folding of a secondary battery cell according to one aspect of the present disclosure, the lower prop may move upward or downward below the terrace portion while facing the upper prop, the lower prop may hold the terrace portion together with the upper prop, and the lower prop may include: a lower inner portion on which the electrode stack is disposed in the folding direction, the lower inner portion being provided to face the upper inner portion; and lower outer portions provided to face the upper outer portions, respectively disposed at two opposite ends of the lower inner portion, and further extending than the lower inner portion in the folding direction such that a thickness of the lower outer portion, which comes into contact with the terrace portion in the folding direction, is larger than that of the lower inner portion, and the electrode stack is not disposed in the folding direction.

In the prop device for terrace folding of a secondary battery cell according to one aspect of the present disclosure, the upper and lower props may prevent a pressure, which is applied to the terrace portion in the folding direction, from being transmitted to the electrode stack.

In the prop device for terrace folding of a secondary battery cell according to one aspect of the present disclosure, the upper and lower outer portions may prevent the terrace portion, which is positioned rearward of the upper and lower outer portions based on the folding direction, from being deformed by pressure applied to the terrace portion in the folding direction.

In the prop device for terrace folding of a secondary battery cell according to one aspect of the present disclosure, the upper outer portion may further protrude downward than the upper inner portion, or the lower outer portion may further protrude upward than the lower inner portion.

In the prop device for terrace folding of a secondary battery cell according to one aspect of the present disclosure, at least any one of the upper and lower outer portions may include protruding portions having stepped portions formed on surfaces of the protruding portions that face each other, the stepped portion may protrude while coinciding with an end line of the terrace portion, and the upper or lower outer portion, which does not have the stepped portion, may be fitted with the stepped portion.

In the prop device for terrace folding of a secondary battery cell according to one aspect of the present disclosure, the upper and lower outer portions may be detachably coupled to the upper and lower inner portions, respectively.

In the prop device for terrace folding of a secondary battery cell according to one aspect of the present disclosure, the protruding portions may be detachably coupled to the upper and lower outer portions.

### [Advantageous Effects]

According to the present disclosure, the upper and lower outer portions are formed at the two opposite ends of each of the upper and lower props and extend in the width direction of the secondary battery cell. Therefore, it is possible to prevent the deformation defect in which the outer terrace cannot be supported by the electrode stack.

### [Description of Drawings]

FIG. 1 is a view illustrating an example of a prop device for terrace folding of a secondary battery cell.
FIGS. 2 and 3 are side views of FIG. 1.
FIG. 4 is a side view of a secondary battery cell having a terrace portion folded by using the prop device for terrace folding of a secondary battery cell in FIG. 1.
FIG. 5 is a view illustrating a first embodiment of the prop device for terrace folding of a secondary battery cell according to the present disclosure.
FIG. 6 is a view for explaining a state in which the upper and lower props grip a terrace portion while moving upward or downward in FIG. 5.
FIGS. 7 and 8 are cross-sectional views illustrating point A in time 6100 and point B in time 6200 in FIG. 6.
FIG. 9 is a side view of a secondary battery cell having a terrace portion folded by using the prop device for terrace folding of a secondary battery cell in FIG. 5.
FIG. 10 is a view illustrating a second embodiment of the prop device for terrace folding of a secondary battery cell according to the present disclosure.
FIG. 11 is a view illustrating a third embodiment of the prop device for terrace folding of a secondary battery cell according to the present disclosure.

### [Modes of the Invention]

Hereinafter, embodiments of a prop device for terrace folding of a secondary battery cell according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

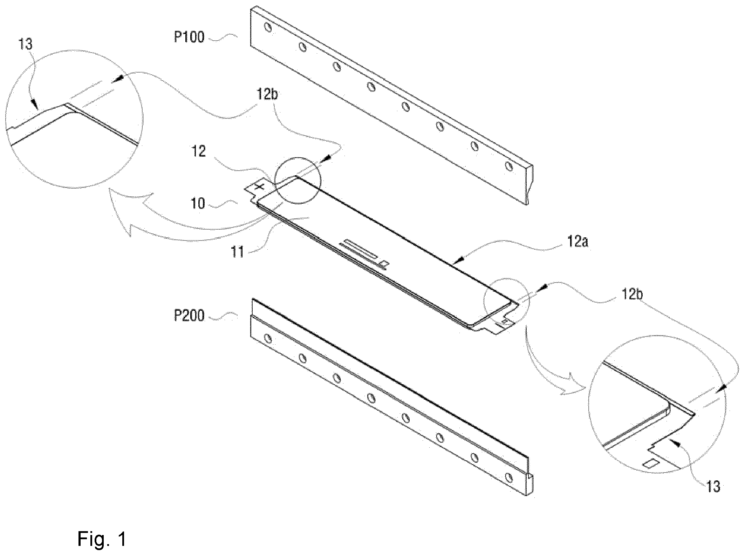

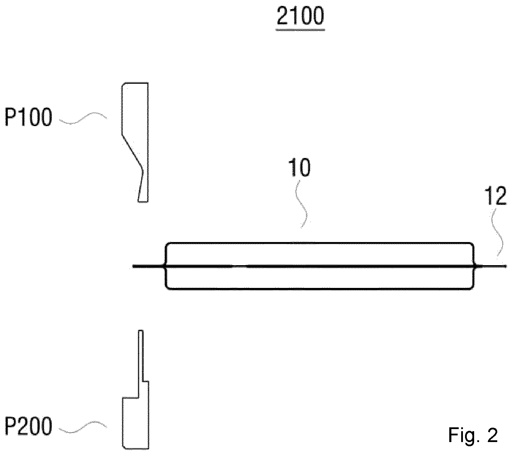

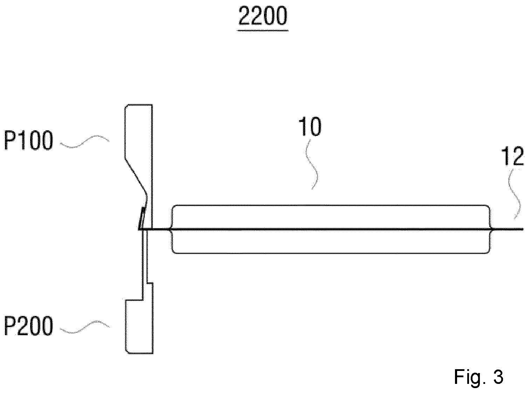

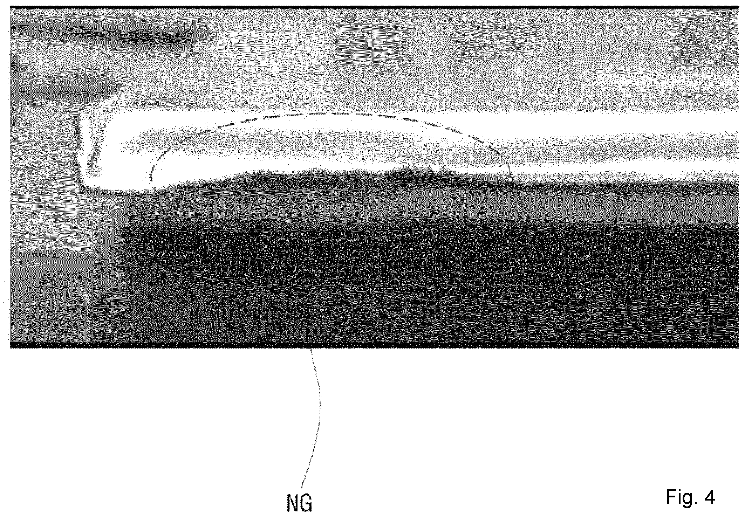

FIG. 1 is a view illustrating an example of a prop device for terrace folding of a secondary battery cell, FIGS. 2 and 3 are side views of FIG. 1, and FIG. 4 is a side view of a secondary battery cell having a terrace portion folded by using the prop device for terrace folding of a secondary battery cell in FIG. 1.

Referring to FIG. 1, a prop device for terrace folding of a secondary battery cell includes an upper prop P 100 in the related art and a lower prop P200 in the related art.

FIG. 1 illustrates a state in which the upper prop P100 is moved upward, and the lower prop P200 is moved downward.

The upper and lower props P100 and P200 are disposed between an electrode stack 11 of a terrace portion 12 of a secondary battery cell 10 and an end of the terrace portion 12.

FIGS. 2 and 3 illustrate a state 2100 in which the upper prop P100 is moved upward and the lower prop P200 is moved downward and a state 2200 in which the upper and lower props P100 and P200 grip the terrace portion 12 while moving upward or downward.

In the state in which the terrace portion 12 is gripped, an end of the terrace portion 12 is folded upward. In this case, the upper prop P100 supports the terrace portion 12 being folded.

Referring to FIGS. 1, 2, and 3, the folded terrace portion 12 may include an inner terrace 12a and an outer terrace 12b.

The electrode stack 11 is disposed on the inner terrace 12a in a direction in which the terrace portion 12 is folded.

The electrode stack 11 is not disposed on the outer terrace 12b in the direction in which the terrace portion 12 is folded. The outer terraces 12b are generally disposed at two opposite ends of the inner terrace 12a.

In the prop device for terrace folding of a secondary battery cell illustrated in FIGS. 1, 2, and 3, a cross-sectional shape of each of the upper and lower props P100 and P200 is kept constant in respect to the inner terrace 12a and the outer terrace 12b.

However, in the case of the inner terrace 12a, the electrode stack 11 is disposed rearward of the upper and lower props P100 and P200. In contrast, in the case of the outer terrace 12b, the outer terrace 12b, instead of the electrode stack 11, is disposed rearward of the upper and lower props P100 and P200. Because of the difference, a risk of a defect of deformation of the outer terrace 12b increases when the same pressure is applied to the inner terrace 12a and the outer terrace 12b.

Referring to FIG. 4, a deformation defect NG of the terrace portion, which occurs on the secondary battery cell having the folded terrace portion, may be identified by using the prop device for terrace folding of a secondary battery cell in FIG. 1.

The deformation defect NG of the terrace portion illustrated in FIG. 4 occurs at a defect occurrence position 13 in FIG. 1.

The defect occurrence position 13 in FIG. 1 is a position spaced apart from the outer terrace 12b in a width direction of the secondary battery cell 10.

The electrode stack 11 is disposed on the inner terrace 12a in the direction in which the terrace portion 12 is folded. Therefore, the non-folded terrace portion 12 is not deformed during the process of folding the terrace portion 12.

In contrast, the electrode stack is not disposed on the outer terrace 12b in the direction in which the terrace portion 12 is folded. Therefore, the non-folded terrace portion 12 is deformed during the process in which the terrace portion 12 is folded.

This is because the terrace portion 12 at the defect occurrence position 13 is pressed in a transverse direction when the outer terrace portion 12 is folded.

For this reason, the terrace portion 12 at the defect occurrence position may be wrinkled or bent in an upward/downward direction.

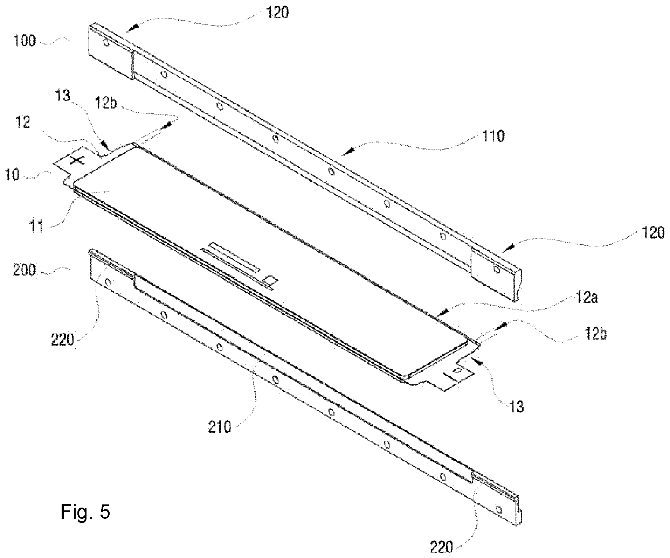

FIG. 5 is a view illustrating a first embodiment of the prop device for terrace folding of a secondary battery cell according to the present disclosure.

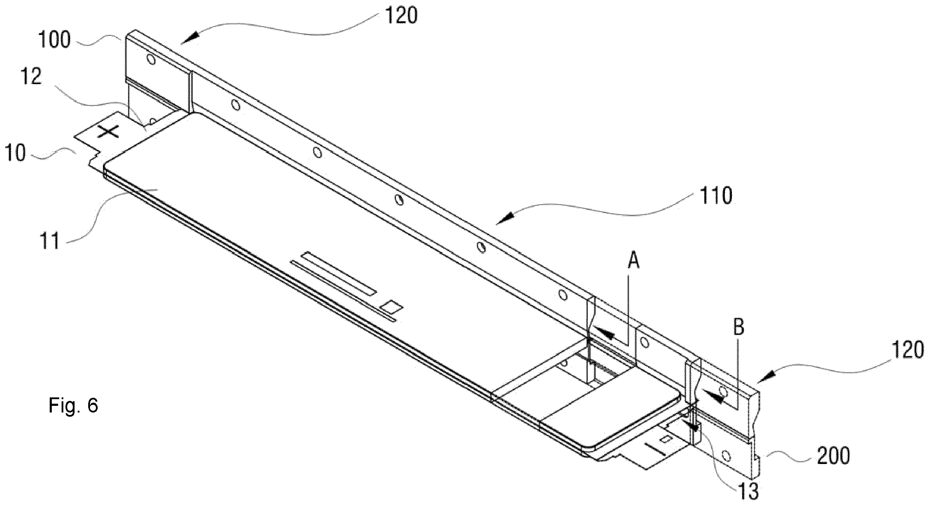

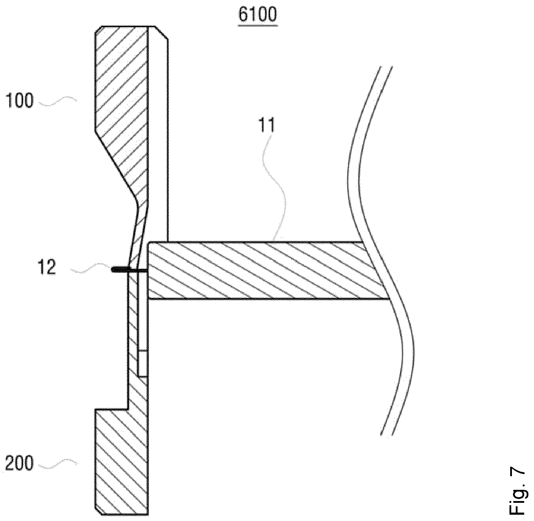

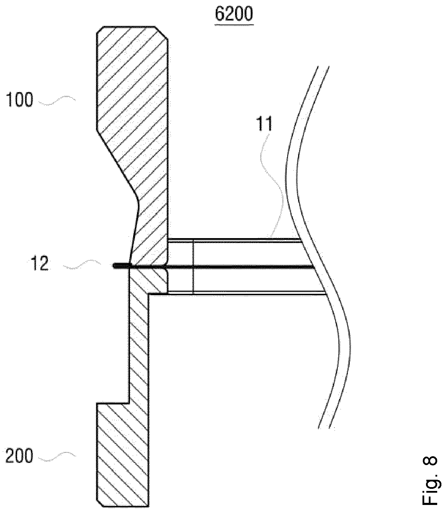

In addition, FIG. 6 is a view for explaining a state in which the upper and lower props grip a terrace portion while moving upward or downward in FIG. 5, and FIGS. 7 and 8 are cross-sectional views illustrating point A in time and point B in time in FIG. 6.

Referring to FIGS. 5 to 7 and 8, the prop device for terrace folding of a secondary battery cell according to the present embodiment is a device for supporting, in a folding direction, the terrace portion 12 to be folded. The secondary battery cell 10 has the electrode stack 11 and the terrace portion 12.

The electrode stack 11 is configured by stacking electrodes and formed to be thicker than the terrace portion 12.

The terrace portion 12 is formed along an outer periphery of the electrode stack 11, and a part of the terrace portion 12 is folded toward the electrode stack 11.

The prop device for terrace folding of a secondary battery cell according to the present embodiment has the upper prop 100 and the lower prop 200.

The upper prop 100 includes an upper inner portion 110 and upper outer portions 120 and moves upward or downward at a position above the terrace portion 12 of the secondary battery cell 10.

The upper inner portion 110 is disposed between the electrode stack 11 and an end line of the terrace portion 12. The electrode stack 11 is disposed in the folding direction of the terrace portion 12.

The upper outer portions 120 are disposed at two opposite ends of the upper inner portion, and the electrode stack 11 is not disposed in the folding direction of the terrace portion 12. In addition, the upper outer portion 120 may further extend than the upper inner portion 110 in the folding direction of the terrace portion 12.

The lower prop 200 includes a lower inner portion 210 and lower outer portions 220 and moves upward or downward. The lower prop 200 is provided below the terrace portion 12 of the secondary battery cell 10 and faces the upper prop 100.

The lower inner portion 210 is disposed below the upper inner portion 110.

The lower outer portion 220 is disposed below the upper outer portion 120 and further extend than the lower inner portion 210 in the folding direction of the terrace portion 12.

Specifically, in the case of the upper and lower props 100 and 200, a thickness for holding the terrace portion 12 in a region (i.e., a region 12a in FIG. 1) in which the electrode stack 11 is disposed at the rear side based on the folding direction is larger than a thickness for holding the terrace portion 12 in a region (i.e., a region 12b FIG. 1) in which the electrode stack 11 is not disposed at the rear side based on the folding direction.

Therefore, because the upper and lower outer portions 120 and 220 according to the present disclosure further extend than the upper and lower inner portions 110 and 210, respectively, in the folding direction, it is possible to prevent the occurrence of a deformation defect of the terrace portion 12 at the defect occurrence position.

Because the upper and lower outer portions 120 and 220 further extend in the folding direction of the terrace portion 12, the prop device may come into close contact with and restrain wide areas of the upper and lower surfaces of the terrace portion 12, thereby preventing the occurrence of wrinkles caused by transverse pressure applied to the terrace portion 12 during the folding process.

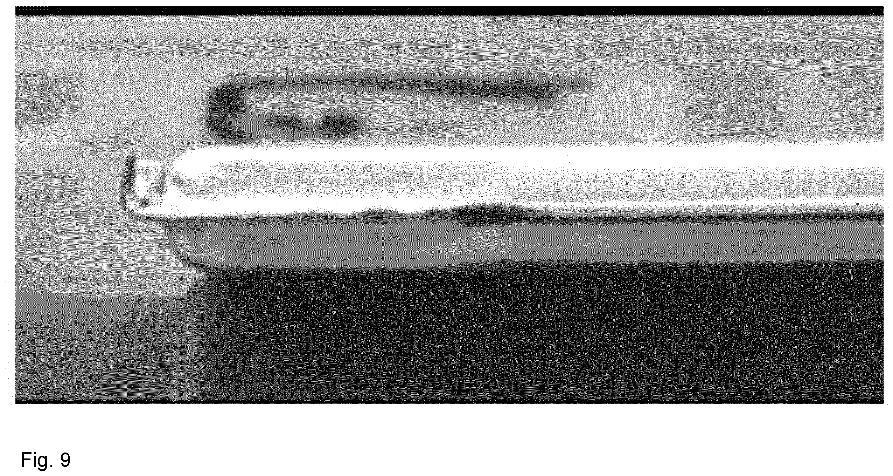

FIG. 9 is a side view of a secondary battery cell having a terrace portion folded by using the prop device for terrace folding of a secondary battery cell in FIG. 5.

Referring to FIG. 9, it can be seen that the separation of the terrace portion and the deformation defect at the defect occurrence position in FIG. 4 may be prevented.

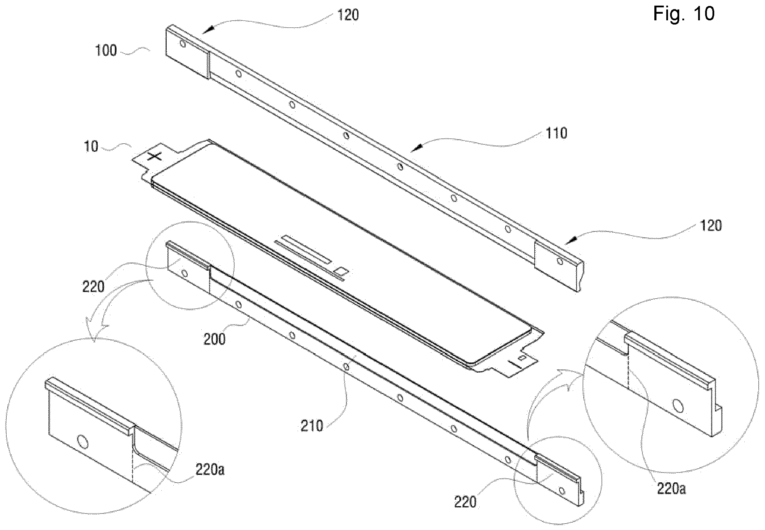

FIG. 10 is a view illustrating a second embodiment of the prop device for terrace folding of a secondary battery cell according to the present disclosure.

Referring to FIG. 10, in the prop device for terrace folding of a secondary battery cell according to the present embodiment, the upper outer portion 120 may further protrude downward than the upper inner portion 110, or the lower outer portion 220 may further protrude upward than the lower inner portion 210.

Therefore, the prop device for terrace folding of a secondary battery cell according to the present embodiment may press and grip the upper and lower surfaces of the outer terrace 12b.

As can be seen from FIGS. 5 to 7 and 8, the upper and lower inner portions 110 and 210 each have a narrow, long structure.

When the upper and lower inner portions 110 and 210 face each other and move to press the terrace portion 12 while moving upward or downward, the terrace portion 12 is disposed in a gap defined between the upper and lower inner portions 110 and 210. The gap is larger than a thickness of the terrace portion 12.

The upper inner portion 110 provides a support surface on which the terrace portion 12 to be folded is supported. In addition, the lower inner portion 210 prevents the terrace portion 12 to be folded from being bent downward.

That is, the upper and lower inner portions 110 and 210 support the upper and lower surfaces of the terrace portion 12 without physically pressing the terrace portion 12 to be folded so that the shape to be formed is easily formed.

If the gap is smaller than the thickness of the terrace portion 12, the upper and lower inner portions 110 and 210 physically press the terrace portion 12 to be folded.

Therefore, there may occur a defect in which insulation resistance is decreased between electrodes and pouch aluminum layers constituting the secondary battery cell.

However, the upper and lower outer portions 120 and 220 disposed on the upper and lower surfaces of the outer terrace 12b may restrain the upper and lower surfaces of the outer terrace 12b by using large surfaces.

That is, the upper and lower outer portions 120 and 220 disposed adjacent to the upper and lower surfaces of the outer terrace 12b prevent the outer terrace 12b from being wrinkled when the terrace portion 12 is bent. Therefore, it is possible to prevent a deformation defect from occurring at the defect occurrence position 13.

In addition, the upper and lower outer portions 120 and 220 may come into surface contact with the outer terrace 12b by using larger surfaces in comparison with the upper and lower inner portions 110 and 210.

Therefore, even when the upper and lower outer portions 120 and 220 press the terrace portion 12, particularly, the outer terrace 12b, it is possible to prevent the above-mentioned defect in which the insulation resistance is decreased.

That is, the prop device for terrace folding of a secondary battery cell according to the present embodiment may grip the terrace portion 12 while minimizing damage to the outer terrace 12b.

In addition, in the prop device for terrace folding of a secondary battery cell according to the present embodiment, the upper and lower outer portions 120 and 220 may be detachably coupled to the upper and lower inner portions 110 and 210, respectively.

In this case, the upper and lower outer portions 120 and 220 may be separated from the upper and lower inner portions 110 and 210 along outer portion separation lines 220a.

In the secondary battery cell 10, the pouch having a complicated multilayer structure is used to seal the electrode and form the terrace portion 12.

Therefore, when the type or structure of the pouch varies, the thickness of the terrace portion 12 is changed.

A process of precisely modifying an upward/downward movement length needs to be performed to move the upper and lower props 100 and 200 upward or downward without damaging the terrace portion 12.

According to the prop device for terrace folding of a secondary battery cell according to the present embodiment, it is not necessary to change a control length of the upward/downward movement length of the upper and lower props 100 and 200 when the type of pouch constituting the secondary battery cell 10 is changed, and thus the thickness of the terrace portion 12 is changed.

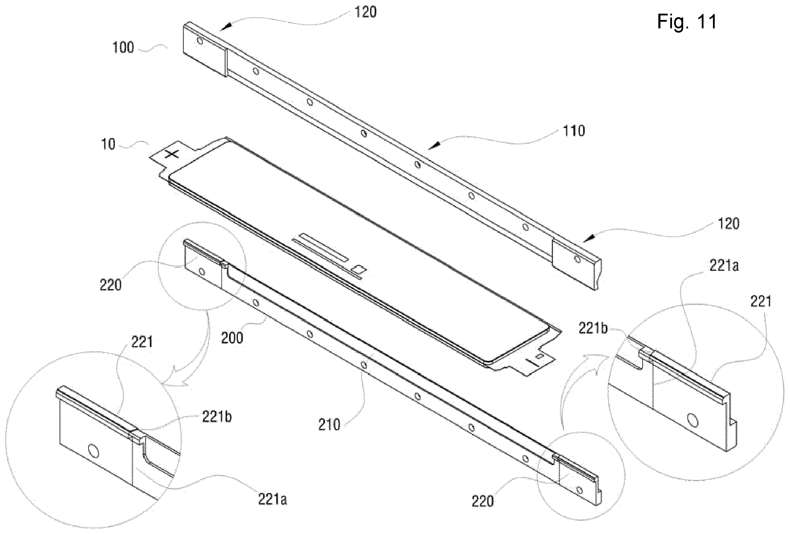

FIG. 11 is a view illustrating a third embodiment of the prop device for terrace folding of a secondary battery cell according to the present disclosure.

In the prop device for terrace folding of a secondary battery cell according to the present embodiment, at least any one of the upper and lower outer portions 120 and 220 may further include protruding portions 221.

The protruding portions 221 have stepped portions 221b formed on surfaces of the protruding portions 221 that face each other. The stepped portion 221b protrudes while coinciding with the end line of the terrace portion.

In this case, the upper or lower outer portion 120 or 220, which does not have the stepped portion 221b, is fitted with the stepped portion 221b.

In the present embodiment, the stepped portion 221b, which is disposed to be coincident with the end line of the terrace portion 12, restrains the terrace portion 12 so that the terrace portion 12 is not deformed in the transverse direction.

Because of the nature of the terrace portion 12, very precise control is required to apply a physical external force as described above.

However, as the precision of control increases, the operating time or volume increases, and expensive precision control components are needed.

The prop device for terrace folding of a secondary battery cell according to the present embodiment restricts a minimum value of the gap when the upper and lower props 100 and 200 face each other and press the terrace portion 12 while moving upward or downward.

In addition, in the prop device for terrace folding of a secondary battery cell according to the present embodiment, the protruding portion 221 may be detachably coupled to the upper and lower outer portions 120 and 220.

In this case, the protruding portions 221 may be separated from or coupled to the upper and lower outer portions 120 and 220 along protruding portion separation lines 221a.

The terrace portion 12, particularly, the outer terrace 12b of the secondary battery cell may vary depending on the product type of the secondary battery cell.

The prop device for terrace folding of a secondary battery cell according to the present embodiment may be applied to various types of secondary battery cells because the protruding portions 221 are detachably coupled to the upper and lower outer portions 120 and 220.

## Claims

1. A prop device for terrace folding of a secondary battery cell, which supports, in a direction facing a folding direction, a terrace portion of a secondary battery cell including an electrode stack configured by stacking electrodes, and the terrace portion formed along an outer periphery of the electrode stack and having a part to be folded in the folding direction toward the electrode stack, the prop device comprising:
upper and lower props disposed forward of the electrode stack based on the folding direction and each elongated to have a length from one end to the other end of the secondary battery cell in a direction orthogonal to the folding direction, the upper and lower props being disposed above and below the terrace portion while facing each other and configured to hold the terrace portion,
wherein the upper and lower props are configured such that a thickness for holding the terrace portion in a region in which the electrode stack is disposed at a rear side based on the folding direction is larger than a thickness for holding the terrace portion in a region in which the electrode stack is not disposed at the rear side based on the folding direction.

2. The prop device of claim 1, wherein the upper prop moves upward or downward above the terrace portion, and the upper prop is disposed between the electrode stack and the terrace portion, and
wherein the upper prop comprises:
an upper inner portion on which the electrode stack is disposed in the folding direction; and
upper outer portions respectively disposed at two opposite ends of the upper inner portion and further extending than the upper inner portion in the folding direction such that a thickness of the upper inner portion, which comes into contact with the terrace portion in the folding direction, is larger than that of the upper inner portion, and the electrode stack is not disposed in the folding direction.

3. The prop device of claim 2, wherein the lower prop moves upward or downward below the terrace portion while facing the upper prop, and the lower prop holds the terrace portion together with the upper prop, and
wherein the lower prop comprises:
a lower inner portion on which the electrode stack is disposed in the folding direction, the lower inner portion being provided to face the upper inner portion; and
lower outer portions provided to face the upper outer portions, respectively disposed at two opposite ends of the lower inner portion, and further extending than the lower inner portion in the folding direction such that a thickness of the lower outer portion, which comes into contact with the terrace portion in the folding direction, is larger than that of the lower inner portion, and the electrode stack is not disposed in the folding direction.

4. The prop device of claim 3, wherein the upper and lower props prevent a pressure, which is applied to the terrace portion in the folding direction, from being transmitted to the electrode stack.

5. The prop device of claim 3, wherein the upper and lower outer portions prevent the terrace portion, which is positioned rearward of the upper and lower outer portions based on the folding direction, from being deformed by pressure applied to the terrace portion in the folding direction.

6. The prop device of claim 3, wherein the upper outer portion further protrudes downward than the upper inner portion, or the lower outer portion further protrudes upward than the lower inner portion.

7. The prop device of claim 3, wherein at least any one of the upper and lower outer portions comprises protruding portions having stepped portions formed on surfaces of the protruding portions that face each other, and the stepped portion protrudes while coinciding with an end line of the terrace portion, and
wherein the upper or lower outer portion, which does not have the stepped portion, is fitted with the stepped portion.

8. The prop device of claim 3, wherein the upper and lower outer portions are detachably coupled to the upper and lower inner portions, respectively.

9. The prop device of claim 7, wherein the protruding portions are detachably coupled to the upper and lower outer portions.
